Europäisches Patentamt

European Patent Office

Office européen des brevets

(19)

(11) Veröffentlichungsnummer: **0 315 010 B1**

(12) **EUROPÄISCHE PATENTSCHRIFT**

(45) Veröffentlichungstag der Patentschrift: **09.09.92**

(51) Int. Cl.⁵: **C08L 23/08**, C09D 123/26, C08F 4/32

(21) Anmeldenummer: **88117668.9**

(22) Anmeldetag: **24.10.88**

(54) **Lackharz und sein Einsatz für die Pulverlackierung.**

(30) Priorität: **03.11.87 DE 3737194**

(43) Veröffentlichungstag der Anmeldung:
**10.05.89 Patentblatt 89/19**

(45) Bekanntmachung des Hinweises auf die
Patenterteilung:
**09.09.92 Patentblatt 92/37**

(84) Benannte Vertragsstaaten:
**AT BE DE ES FR GB IT NL SE**

(56) Entgegenhaltungen:
**EP-A- 0 224 349**
**DD-A- 146 900**
**FR-A- 2 421 936**

(73) Patentinhaber: **EC ERDÖLCHEMIE GMBH**
**Postfach 75 20 02**
**W-5000 Köln 71(DE)**

Patentinhaber: **BAYER AG**

**W-5090 Leverkusen 1 Bayerwerk(DE)**

(72) Erfinder: **Herwig, Jens, Dr.**
**Nerzweg 2**
**W-5000 Koeln 40(DE)**
Erfinder: **Burgdörfer, Hans-Heribert, Dr.**
**Goffineweg 49**
**W-5000 Koeln 80(DE)**
Erfinder: **Woltjes, Dieter**
**Claudiusstrasse 47**
**W-4047 Dormagen 1(DE)**

(74) Vertreter: **Schumacher, Günter, Dr. et al**
**c/o Bayer AG Konzernverwaltung RP Patent-**
**abteilung**
**W-5090 Leverkusen 1 Bayerwerk(DE)**

EP 0 315 010 B1

**Beschreibung**

Die Erfindung betrifft ein neues Lackharz auf der Basis eines modifizierten Hochdruck-Polyethylens (LDPE) mit speziellen Haftungseigenschaften und dessen Einsatz für die Pulverlackierung.

Es hat nicht an Versuchen gefehlt, Formkörper, insbesondere aus Metall, durch Überzüge von preiswerten und chemikalienresistenten Polymeren, wie Polyethylen oder Polyvinylchlorid vor dem Einfluß korrosiver Umweltmedien zu schützen. Jedoch sind die Haftungseigenschaften der genannten Polymeren ungenügend, so daß bei Metalloberflächen ein Unterrosten stattfindet und ein echter Langzeitschutz nicht gegeben ist.

Es sind bereits Copolymere aus Ethylen und ungesättigten Carbonsäuren bekannt (US 3.520.861). Der Säuregehalt ist hierin mit 0,1-20 Gew.-% beschrieben; jedoch werden offenbar erst bei Mindestwerten von etwa 4 Gew.-% Acrylsäure Haftungseigenschaften erzielt, die für die Verwendung solcher Copolymerer für Beschichtungen und Laminate ausreichen.

Aus ökonomischen Gründen wird das Säurecopolymere häufig nur als Primer für das preiswertere Polyolefin verwendet. In GB 20 97 809 wird z.B. eine Stahlrohrbeschichtung aus 0,25 mm Primerschichtdikke, bestehend aus einem Propylen-Acrylsäure-Copolymeren, und 2,5 mm Deckschichtdicke, bestehend aus einer Polypropylen/Polybuten-1-Mischung, beschrieben.

Der Umgang mit größeren Mengen ungesättigter Carbonsäuren stellt an die Polymerisationsapparatur höhere Anforderungen bezüglich der Korrosionsfestigkeit. Es ist daher bereits früher untersucht worden (US 3.132.120), anstelle der ungesättigten Carbonsäuren die tert.-Butylester ungesättigter Carbonsäuren einzupolymerisieren. Nach der Polymerisation muß sodann in einer Pyrolyse unter Abspaltung von i-Buten die freie Carboxylgruppe hergestellt werden. Auch hierbei sind höhere Säuregehalte, beispielsweise 4,2 Gew.-% Methacrylsäure, für ausreichende Haftungseigenschaften erforderlich.

In FR-A 2 421 936 werden Gemische aus verschiedenen polymeren Komponenten, die auch Copolymere aus ungesättigten Säuren und Ethylen enthalten, zur Beschichtung von Metallen beschrieben. Diese Copolymeren werden in ihrer Zusammensetzung nicht bezeichnet. Die Gemische enthalten weiterhin Pfropfpolymere.

In EP 0 224 349 A 1 werden Beschichtungsharze beschrieben, die Polyolefine, wie Ethylen-Acrylsäureester-Copolymere, mit angepfropfter Itaconsäure darstellen.

Es wurde nun überraschenderweise gefunden, daß beim Aufbringen von Überzügen aus einem modifizierten Polyethylen sehr geringe Gehalte an einpolymerisierter ungesättigter Carbonsäure zur Erzielung ausreichender Haftungseigenschaften ausreichen, wenn man zum Aufbringen den Weg der Pulverlakkierung wählt und dazu den Schmelzindex solcher Harze auf höhere Werte einstellt. Weiterhin haben solche modifizierten Polyethylene für die Pulverlackierung überraschende und nicht vorhersehbare Haftungseigenschaften, die weiter unten näher beschrieben werden.

Die Erfindung betrifft daher ein Lackharz für die Pulverlackierung, das aus modifiziertem Hochdruck-Polyethylen (LDPE) besteht und gekennzeichnet ist durch

a) einen Gehalt von 0,1-0,6 Mol-% einpolymerisierter ungesättigter Carbonsäuren, bezogen auf die Gesamtmolzahl aller Monomeren, bzw. den halben Gehalt an ungesättigten Dicarbonsäuren oder deren Anhydriden,

b) einen Neutralisationsgrad der Carboxylgruppen, die auch aus Anhydridgruppen hervorgegangen sein können, von 5 bis unterhalb 50 %,

c) einen Termonomergehalt von 0 bis 5 Mol-%, bezogen auf die Gesamtmolzahl aller Monomeren,

d) einen Schmelzindex von 20-200 g/10 Minuten (190°C; 2,16 kg Last (kp)) und

e) eine Korngröße von 1-600 μm.

Das erfindungsgemäße Lackharz hat einen Gehalt von 0,1-0,6 Mol-%, bevorzugt 0,2-0,6 Mol-%, an einer oder mehreren einpolymerisierten ungesättigten Carbonsäuren, bezogen auf die Gesamtmolzahl aller Monomeren. Solche ungesättigten Carbonsäuren sind beispielsweise Acrylsäure, Methacrylsäure, Crotonsäure oder Itaconsäure. Für den Fall, daß zweiwertige ungesättigte Carbonsäuren eingesetzt werden, ist wegen der doppelten Anzahl an Carboxylgruppen erfindungsgemäß nur der halbe Wert für den obengenannten Gehalt zu berücksichtigen. Solche zweiwertigen Carbonsäuren sind beispielsweise Maleinsäure oder Fumarsäure. Es ist erfindungsgemäß weiterhin möglich, eine zweiwertige ungesättigte Carbonsäure auch in Form ihres Anhydrids einzusetzen; als Beispiel hierfür sei Maleinsäureanhydrid genannt. In bevorzugter Weise werden Acrylsäure, Methacrylsäure und Maleinsäureanhydrid verwendet.

Das erfindungsgemäße Lackharz kann nach den dem Fachmann bekannten Hochdruckverfahren für Polyethylene oder Polyethylen-Copolymere hergestellt werden. Hierzu seien Drucke im Bereich von 500-3000 bar, bevorzugt 1200-3000 bar und Temperaturen im Bereich von 120-300°C, bevorzugt 160 bis 280°C, besonders bevorzugt 200-260°C, genannt. Die Polymerisation erfolgt vorwiegend kontinuierlich in einem adiabatisch betriebenen Autoklaven, der einem nahezu ideal durchmischten Kessel entspricht, oder in einer entsprechenden Autoklavenkaskade; für den Fall der Benutzung einer Autoklavenaskade kann man von der Möglichkeit Gebrauch machen, die nachfolgenden Autoklaven als Verweilzeitreaktoren zur Vervollständigung des Comonomerenumsatzes zu verwenden. Besonders zu bevorzugen ist hierbei die Serienfahrweise mit zwei Rührautoklaven, wobei im zweiten Reaktor die Möglichkeit zum nahezu vollständigen Comonomerumsatz gegeben ist. Selbstverständlich kann das Monomerengemisch auch in mehreren Teilströmen auf die Autoklavenkaskade verteilt werden. Weiterhin kann die Polymerisation in einem Strömungsrohr oder in einer Kombination aus Rührautoklaven und Strömungsrohr betrieben werden. Die Hochdruck-Polymerisation wird in Gegenwart eines radikalischen Polymerisationsinitiators durchgeführt, beispielsweise in Gegenwart von tert.-Butylperacetat, Di-tert.-amylperoxid, Di-tert.-butylperoxid, tert.-Butylhydroperoxid, tert.-Amylperpivalat, Butyl-per-2-ethylhexanoat, tert.-Butylperpivalat, tert.-Butylperneodecanoat, tert.-Butylperisononanoat, tert.-Amyl-perneodecanoat oder tert.-Butylperbenzoat.

Durch den Zusatz von Molekulargewichtsreglern, wie gesättigten und ungesättigten Kohlenwasserstoffen oder Oxoverbindungen, z.B. Ethan, Propan, Propen, Propanal, Aceton, Acetaldehyd und ähnlichen kann das Molekulargewicht und damit der Schmelzindex eingestellt werden. Das erfindungsgemäße Lackharz hat einen Schmelzindex von 20-200 g/10 Minuten (190°C; 2,16 Kg Last (kp)), bevorzugt 40-120 g/10 Minuten, besonders bevorzugt 50-100 g/10 Minuten.

Das erfindungsgemäße Lackharz hat weiterhin einen Termonomergehalt von 0 bis 5 Mol-%. Solche Termonomeren sind beispielsweise Vinylacetat, Acrylnitril, Kohlenmonoxid, Schwefeldioxid, Maleinsäurediester, Acrylsäureester, Methacrylsäureester oder auch Gemische dieser Stoffe, bevorzugt Vinylacetat oder Vinylacetat/Kohlenmonoxid-Gemische. Falls solche Termonomere im Lackharz enthalten sind, sei beispielsweise ein Gehalt von 0,1-5 Mol-%, bevorzugt 0,1-4 Mol-%, bezogen auf die Gesamtmolzahl aller Monomeren, genannt.

Zum Einpolymerisieren solcher Termonomerer werden diese dem Einsatzethylen für die oben beschriebene Hochdruckpolymerisation in einer dem Fachmann üblichen Weise zugesetzt. Ein Gehalt an Termonomeren ist für das erfindungsgemäße Lackharz jedoch nicht obligatorisch und kann daher auch entfallen, was durch den obigen Grenzwert 0 (null) Mol-% ausgedrückt wird.

Im erfindungsgemäßen Lackharz liegen weiterhin die vorhandenen Carboxylgruppen teilweise in der neutralisierten Form vor. Der Neutralisationsgrad des erfindungsgemäßen modifizierten LDPE liegt von 5 bis unterhalb 50 % aller vorhandenen Carboxylgruppen, beispielsweise von 5 bis 49 %. Diese Carboxylgruppen können auch aus Säureanhydridgruppen hervorgegangen sein.

Die teilweise Neutralisation beträgt in bevorzugter Weise 5-40 %. Ganz besonders günstige Ergebnisse erhält man mit einem Neutralisationsgrad von 10-30 %. Für die Neutralisation kommen 1-, 2- oder 3-wertige Kationen in Frage, wie die von Lithium, Natrium, Kalium, Magnesium, Calcium, Zink, Kupfer oder Aluminium. In bevorzugter Weise werden 1- oder 2-wertige Kationen eingesetzt, ganz besonders bevorzugt Natrium oder Zink.

Die obengenannten ungesättigten Säuren und/oder Säureanhydride werden, ähnlich wie die Termonomeren, dem Einsatzethylen in einer dem Fachmann bekannten Weise zugesetzt. Dies kann auf verschiedene Weise bewirkt werden. So kann beispielsweise ein Gemisch aus einer oder mehreren ungesättigten Carbonsäuren und dem oder den zugehörigen Salzen, falls dieses Gemisch homogen ist, dem Einsatzethylen - gemeinsam oder getrennt von den gegebenenfalls zugesetzten Termonomeren - vor dem Eintritt in den Hochdruckreaktor zugesetzt werden. In vielen Fällen ist es jedoch zweckmäßig, für die einzusetzenden ungesättigten Carbonsäuren und deren Salze ein Lösungsmittel zu verwenden. Hierfür geeignete Lösungsmittel sind beispielsweise Methanol, Ethanol, Propanol, Isopropanol, Butanol, Isobutanol, Amylalkohol, Glykole aber auch andere, unter Hochdruckpolymerisationsbedingungen stabile, Lösungsmittel, wie Dimethylformamid oder Tetrahydrofuran; selbstverständlich können auch Gemische dieser Lösungsmittel eingesetzt werden. Als Mindestmenge des einzusetzenden Lösungsmittels sei die genannt, die eine homogene Lösung der ungesättigten Carbonsäuren und ihrer Salze herzustellen erlaubt. Die Obergrenze der Lösungsmittelmenge ist durch wirtschaftliche Überlegungen festgelegt, da das Lösungsmittel aus der Polymerisationsreaktion ausgeschleust werden muß. Vielfach kommen Mengen von 2-10 Gew.-Teilen Lösungsmittel pro 1 Gew.-Teil des Gemisches Säure/Salz, bevorzugt 4 bis 7 Teile Lösungsmittel pro 1 Teil des Gemisches Säure/Salz in Betracht.

Es ist jedoch auch möglich, zunächst nur die ungesättigte Säure bzw. deren Anhydride in die Polymerisationsreaktion einzubringen und die beschriebene Neutralisation erst beim fertigen Copolymer vorzunehmen. In diesem Fall kann das fertige Copolymer, beispielsweise in einem nachgeschalteten Compoundierschritt, mit geeigneten Verbindungen der obengenannten Metallkationen behandelt werden, wie den Metalloxiden, den Metallhydroxiden, den Metallformiaten, den Metallacetaten oder den Metallsalzen anderer leicht flüchtiger organischer oder anorganischer Säuren. Wegen der geringen Mengen der entstehenden Spaltprodukte (Wasser, Ameisensäure, Essigsäure, Kohlensäure oder andere leicht flüchtige organische oder anorganische Säuren) können diese ohne eine besondere Entgasung des Copolymeren in diesem Copolymeren verbleiben. In einer bevorzugten Form wird eine solche nachträglich durchgeführte Reaktion im Austragsextruder der Hochdruckpolymerisation vorgenommen.

Das erfindungsgemäße Lackharz hat überraschende, nicht vorhersehbar gewesene Hafteigenschaften. So werden mit dem Lackharz über die Anwendungsform der Pulverlackierung Haftwerte erzielt, die sonst nur mit Säuregehalten von 3-10 % erzielt werden. Der erfindungsgemäß einzustellende Schmelzindex des Lackharzes gewährleistet dabei ein gutes Verfließen des Pulverlacks auch in Oberflächenunebenheiten wie Poren und Furchen. Hierbei werden auch schwer zugängliche Stellen erreicht und mit hoher Sicherheit bedeckt und damit beispielsweise gegen Korrosion geschützt. Der intensive Oberflächenkontakt begünstigt dabei das Haften auf der Oberfläche des zu lackierenden Substrats. Als Pulverlackierung sei hier beispielsweise die Lackierung durch das Wirbelsinterverfahren, die elektrostatische Lackierung oder die Lackierung durch das sogenannte Flammsprühverfahren genannt. Hierzu werden Korngrößen von 1-600 $\mu$m, bevorzugt 3-400 $\mu$m, besonders bevorzugt 5-300 $\mu$m, eingestellt. Bei den beiden zuletzt genannten Lackierverfahren werden mit Vorteil Korngrößen im unteren Teil des weiter oben angegebenen Bereichs eingesetzt. Als zu lackierende Substrate kommen die Oberflächen von Metall, Glas, Keramik und Chemiewerkstoffen in Frage. Besonders wichtig ist die Lackierung von Metalloberflächen unter Einsatz des erfindungsgemäßen Lackharzes.

Die Erfindung betrifft daher weiterhin ein Verfahren zur Pulverlackierung von Formkörpern mit synthetischen Lackharzen, das durch den Einsatz des oben beschriebenen modifizierten Hockdruck-Polyethylens (LDPE) als solches Lackharz gekennzeichnet ist.

Die hervorragenden erzielbaren Haftwerte und das Erreichen auch schwer zugänglicher Stellen verdeutlichen die Überlegenheit der mit dem erfindungsgemäß modifizierten LDPE als Lackharz erreichten Pulverlackierung gegenüber der Beschichtung von Substraten mit Folien, durch Laminieren, durch Tauchbeschichtung oder durch Heißsiegelmassen.

In überraschender Weise wurde gefunden, daß die Werte der Endhaftung erste nach Stunden oder sogar nach Tagen erreicht werden. Dies erlaubt es, die mit Hilfe des erfindungsgemäßen Lackharzes aufgebrachte Lackschicht innerhalb dieses Zeitraumes ohne Schwierigkeiten und ohne Beschädigung der Substratoberfläche abzuziehen, beispielsweise um Fehllackierungen rückgängig zu machen oder zu korrigieren; diese überraschende Eigenshaft einer geringeren Anfangshaftung macht es beispielsweise auch möglich, Substratoberflächen vorübergehend durch eine Lackierung zu schützen, um danach durch Abziehen der Lackschicht diese Substratoberfläche wieder freizulegen und zugänglich zu machen. Die Endwerte der Haftung liegen beim erfindungsgemäßen Lackharz bei Werten von 2,2 bis etwa 3 N/mm, ausgedrückt als Schälkraft, die zur Entfernung der Lackschicht vom Substrat aufzubringen ist. Bekannte Polyethylen/-(Meth)Acrylsäure-Copolymere mit bedeutend höherem Gehalt an ungesättigter Säure zeigen nur geringfügig höhere Schälkräfte.

Das erfindungsgemäße Lackharz kann den verschiedenen Bedürfnissen in optimaler Weise angepaßt werden. So bewirkt der oben beschriebene Zusatz eines Termonomers einen erhöhten Elastomercharakter der durch Pulverlackierung erzielten Lackschicht, so daß auch Substrate, die während ihres Gebrauchs einer gewissen Verbiegung ausgesetzt sind, mit dem erfindungsgemäßen Lackharz lackiert werden können. Der Zusatz des Termonomeren kann auch die Anfangshaftung der Lackschicht zu höheren Werten hin beeinflussen, wodurch wiederum speziellen Anforderungen entsprochen werden kann.

Die teilweise Neutralisation der Carboxylgruppen erhöht die innere Festigkeit der Lackschicht. Die teilweise Neutralisation wirkt in festem Zustand durch zusätzliche ionische Bindungen im Sinne einer Molekülvernetzung bzw. -vergrößerung, während sie sich bei Anwendung über den geschmolzenen Zustand fast nicht bemerkbar macht.

Schließlich stellt das erfindungsgemäße Lackharz für die Pulverlackierung eine äußerst wirtschaftliche Alternative gegenüber beispielsweise einer Laminierung mit herkömmlichen, jedoch mit höheren Anteilen an ungesättigten Säuren ausgerüsteten Copolymeren dar. Auch die Verwendung eines Primers, verbunden mit dem höheren Aufwand einer Doppelschichtlackierung, kann hierbei entfallen. Das erfindungsgemäße Lackharz für die Pulverlackierung erzielt nämlich die genannten vorteilhaften Eigenschaften bei einem außerordentlich geringen Anteil von einzupolymerisierenden ungesättigten Säuren. Dieser geringe Anteil setzt zum einen die korrosive Wirkung solcher Säuren herab, wodurch das Produktionsverfahren wirtschaftlich günstig gestaltet werden kann. Zum anderen setzt der geringe Anteil der ungesättigten Carbonsäuren, deren Preis ein Vielfaches von dem des Ethylens ist, die Rohstoffkosten herab. Alle diese Effekte bewirken, daß der Einsatz des erfindungsgemäßen Lackharzes für die Pulverlackierung dieses lösungsmittelfreie und daher umweltfreundliche Verfahren wirtschaftlich attraktiver gestaltet.

Beispiele 1-3

In 2 in Serie kontinuierlich durchströmten stopfbuchslosen 700 ml-Hochdruckrührautoklaven mit idealer Rückvermischung wurden die in der Tabelle aufgeführten Monomerströme durch jeweilige Zugabe von PO (tert.-Butylperisooctanoat), APPV (Amylperpivalat) bzw. PN (tert.-Butylperisononanoat) in den beiden Reaktoren bei einem Reaktionsdruck bis zu 1.850 bar copolymerisiert. Die Einsatzdosierung des Monomerengemisches wurde im Verhältnis 5:1 auf die Reaktoren 1 und 2 aufgeteilt. In einem nachgeschalteten Entspannungsabscheider wurde das Copolymerisat von unumgesetztem Ethylen befreit.

Zur Molekulargewichtseinstellung wurde dem Eingangsstrom Propionaldehyd (PRAL) hinzugegeben. Die Reaktionstemperatur wurde mit Hilfe der Initiatormenge kontrolliert.

Die Versuchsparameter und Produkteigenschaften sind in der Tabelle dargestellt.

Zur Pulverlackierung wurden die Polymere auf eine durchschnittliche Korngröße von 160 $\mu$m vermahlen.

Tabelle:

Lackharze aus mit ungesättigten Carbonsäuren und gegebenenfalls Vinylacetat (VA) modifiziertem Hochdruck-Polyethylen

| Bei-spiel Nr. | Ethylen (kg/h) | ungesätt. Säure* (g/h; Art) | VA (g/h) | Regler (g/h; Art) | Initiator Reaktor 1 (g/h; Art) | Initiator Reaktor 2 (g/h; Art) | Temperatur Reaktor 1 (°C) | Temperatur Reaktor 2 (°C) | Gehalt an Comonomeren (Gew.-/Mol-%) | MI (g/10 Min) |
|---|---|---|---|---|---|---|---|---|---|---|
| 1 | 40 | 80 ACS | – | 205 PRAL | 1,5 PO | 0,1 PN | 212 | 250 | ** 1,4/0,56 ACS; 15 % als Zn-Ionomer | 62 |
| 2*** | 40 | – – | 3770 | 113 PRAL | 0,8 APPV | 0,1 PN | 180 | 230 | 9,7/3,4 VA | 63 |
| 3*** | 40 | 449 MAS | – | 100 PRAL | 1,9 PO | 0,4 PN | 212 | 250 | 10/3,51 MAS; +11,8/4,1 VA | 66 |

* MAS = Methacrylsäure
  ACS = Acrylsäure

** zu 15 % mit $Zn^{2+}$ neutralisiert

*** Vergleichsbeispiele

Die Lackharze wurden im Wirbelsinterverfahren auf 2 mm starkes gestrahltes Stahlblech aufgetragen.

Beispiel 1

6

| Vorwärmung: | 8 Min. bei 320°C |
|---|---|
| Tauchzeit: | 6 Sek. |
| Aufschmelzzeit: | 6 Sek.; |

Die erhaltene glatte Beschichtung des Ionomeren von 0,6 mm Dicke wies eine Haftfestigkeit von 1,3 N/mm auf, die sich mit zunehmender Lagerdauer wesentlich erhöhte.

| Lagerdauer (Tage) | 1/2 | 1 | 2 | 10 | 17 |
|---|---|---|---|---|---|
| Schälkraft (N/mm) | 1,3 | 1,9 | 2,3 | 2,7 | 2,8 |

Beispiel 2 (zum Vergleich)

| Vorwärmung: | 8 Min. bei 320°C |
|---|---|
| Tauchzeit: | 6 Sek. |
| Aufschmelzzeit: | 3 Sek.; |

Die glatte und klare Beschichtung von 0,6 mm Dicke ließ sich im Rollenschälversuch nach DIN 53 289 mit 2 cm breiten Streifen abziehen. Die Schälkräfte nahmen mit der Lagerdauer zu:

| Lagerdauer (Tage) | 1/2 | 1 | 2 | 10 | 17 |
|---|---|---|---|---|---|
| Schälkraft (N/mm) | 1,2 | 1,35 | 1,4 | 1,5 | 1,5 |

Beispiel 3 (zum Vergleich)

| Vorwärmung: | 8 Min. bei 320°C |
|---|---|
| Tauchzeit: | 6 Sek. |
| Aufschmelzzeit: | 4 Sek.; |

Es resultierte eine Beschichtung von 0,6 mm Dicke

| Lagerdauer (Tage) | 1/2 | 1 | 2 | 10 | 17 |
|---|---|---|---|---|---|
| Schälkraft (N/mm) | 3,0 | 3,2 | 3,3 | 3,6 | 3,5 |

**Patentansprüche**

1. Lackharz für die Pulverlackierung, bestehend aus modifiziertem Hochdruck-Polyethylen (LDPE), das gekennzeichnet ist durch
   a) einen Gehalt von 0,1-0,6 Mol-% einpolymerisierter ungesättigter Carbonsäuren, bezogen auf die Gesamtmolzahl aller Monomeren bzw. den halben Gehalt an ungesättigten Dicarbonsäuren oder deren Anhydriden,
   b) einen Neutralisationsgrad der Carboxylgruppen, die auch aus Anhydridgruppen hervorgegangen sein können, von 5 bis unterhalb 50 %,
   c) einen Termonomergehalt von 0-5 Mol-%, bezogen auf die Gesamtmolzahl aller Monomeren,
   d) einen Schmelzindex von 20-200 g/10 Minuten (190°C; 2,16 kg Last (kp)) und
   e) eine Korngröße von 1-600 $\mu$m.

2. Lackharz nach Anspruch 1, gekennzeichnet durch einpolymerisierte Acrylsäure und/oder Methacrylsäu-

7

re und/oder Maleinsäureanhydrid.

3. Lackharz nach Ansprüchen 1 und 2, gekennzeichnet durch einen Termonomergehalt an Vinylacetat oder Vinylacetat/Kohlenmonoxid-Gemischen in einer Menge von 0,1-5 Mol-%, bezogen auf die Gesamtmolzahl aller Monomeren.

4. Lackharz nach Ansprüchen 1 bis 3, gekennzeichnet durch einen Neutralisationsgrad der Carboxylgruppen von 5-40 %.

5. Verfahren zur Pulverlackierung von Formkörpern mit synthetischen Lackharzen, dadurch gekennzeichnet, daß als Lackharz ein modifiziertes Hochdruck-Polyethylen (LDPE) eingesetzt wird, das gekennzeichnet ist durch
a) einen Gehalt von 0,1-0,6 Mol-% einpolymerisierte ungesättigte Carbonsäuren, bezogen auf die Gesamtmolzahl aller Monomeren bzw. den halben Gehalt an ungsättigten Dicarbonsäuren oder deren Anhydriden,
b) einen Neutralisationsgrad der Carboxylgruppen, die auch aus Anhydridgruppen hervorgegangen sein können, von 5 bis unterhalb 50 %,
c) einen Termonomergehalt von 0-5 Mol-%, bezogen auf die Gesamtmolzahl aller Monomeren,
d) einen Schmelzindex von 20-200 g/10 Minuten (190°C; 2,16 kg Last (kp)) und
e) eine Korngröße von 1-600 μm.

6. Verfahren nach Anspruch 5, dadurch gekennzeichnet, daß das Lackharz einpolymerisierte Acrylsäure und/oder Methacrylsäure und/oder Maleinsäureanhydrid enthält.

7. Verfahren nach Ansprüchen 5 und 6, dadurch gekennzeichnet, daß das Lackharz als Termonomer Vinylacetat oder Vinylacetat/Kohlenmonoxid-Gemische in einer Menge von 0,1-5 Mol-%, bezogen auf die Gesamtmolzahl aller Monomeren, enthält.

8. Verfahren nach Ansprüchen 5 bis 7, dadurch gekennzeichnet, daß die Carboxylgruppen zu 5-40 % neutralisiert sind.

**Claims**

1. Paint resin for powder coating which consists of modified high-pressure polyethylene (LDPE) and is characterized by
a) a content of 0.1-0.6 mol %, based on the total number of moles of all monomers, of unsaturated carboxylic acids present as copolymerized units, or half this content of unsaturated dicarboxylic acids or anhydrides thereof,
b) a neutralization degree of the carboxyl groups, which can also originate from anhydride groups, from 5 to less than 50 %,
c) a termonomer content of 0-5 mol %, based on the total number of moles of all monomers,
d) a melt flow index of 20-200 g/10 minutes (190°C; 2.16 kg load (kp)) and
e) a particle size of 1-600 μm.

2. Paint resin according to Claim 1, characterized by acrylic acid and/or methacrylic acid and/or maleic anhydride being present as copolymerized units.

3. Paint resin according to Claims 1 and 2, characterized by a termonomer content of vinyl acetate or vinyl acetate/carbon monoxide mixtures in an amount of 0.1-5 mol %, based on the total number of moles of all monomers.

4. Paint resin according to Claims 1 to 3, characterized by a neutralization degree of the carboxyl groups of 5-40 %.

5. Process for powder coating mouldings by synthetic paint resins, characterized in that a modified high-pressure polyethylene (LDPE) is used as the paint resin, the resin being characterized by
a) a content of 0.1-0.6 mol %, based on the total number of moles of all monomers, of unsaturated carboxylic acids present as copolymerized units, or half this content of unsaturated dicarboxylic

8

acids or anhydrides thereof,

b) a neutralization degree of the carboxyl groups, which can also originate from anhydride groups, from 5 to less than 50 %,

c) a termonomer content of 0-5 mol %, based on the total number of moles of all monomers,

d) a melt flow index of 20-200 g/10 minutes (190°C; 2.16 kg load (kp)) and

e) a particle size of 1-600 $\mu$m.

6. Process according to Claim 5, characterized in that the paint resin contains acrylic acid and/or methacrylic acid and/or maleic anhydride present as copolymerized units.

7. Process according to Claims 5 and 6, characterized in that the paint resin contains as termonomer vinyl acetate or vinyl acetate/carbon monoxide mixtures in an amount of 0.1-5 mol % based on the total number of moles of all monomers.

8. Process according to Claims 5 to 7, characterized in that the carboxyl groups are neutralized to 5-40%.

**Revendications**

1. Résine pour vernis ou revêtement similaire destinée au vernissage ou à l'enduction par poudre, constituée par du polyéthylène haute pression (LDPE) modifié, qui se **caractérise par :**

a) une teneur en acides carboxyliques insaturés copolymérisés de l'ordre de 0,1 à 0,6 mole % rapportée à la quantité molaire totale de tous les monomères, ou bien la moitié de la teneur en acides dicarboxyliques insaturés ou en leurs anhydrides,

b) un degré de neutralisation quant aux groupes carboxyle, qui peuvent également provenir de groupes anhydrides, de 5 à moins de 50%,

c) une teneur en termonomère de 0 à 5 moles % rapportée à la quantité molaire totale de tous les monomères,

d) un indice de fusion de 20-200 g/10 minutes (190°C; 2,16 kg de charge (kp)) et

e) une granulométrie de 1-600 $\mu$m.

2. Résine pour vernis ou revêtement similaire selon la revendication 1, **caractérisée par** de l'acide acrylique et/ou de l'acide méthacrylique et/ou de l'anhydride maléique copolymérisés.

3. Résine pour vernis ou revêtement similaire selon les revendications 1 et 2, **caractérisée par** une teneur en termonomère d'acétate de vinyle ou de mélanges d'acétate de vinyle/monoxyde de carbone dans une quantité de 0,1 à 5 mole % rapportée à la quantité molaire totale de tous les monomères.

4. Résine pour vernis ou revêtement similaire selon les revendications 1 à 3, **caractérisée par** un degré de neutralisation quant aux groupes carboxyle de l'ordre de 5 à 40%.

5. Procédé pour le vernissage ou l'enduction par poudre de corps moulés à l'aide de résines synthétiques pour vernis ou revêtement similaire, **caractérisé en ce qu'**on met en oeuvre, comme résine pour vernis ou analogue un polyéthylène haute pression (LDPE) modifié qui se **caractérise par :**

a) une teneur en acides carboxyliques insaturés copolymérisés de l'ordre de 0,1 à 0,6 mole % rapportée à la quantité molaire totale de tous les monomères, ou bien la moitié de la teneur en acides dicarboxyliques insaturés ou en leurs anhydrides,

b) un degré de neutralisation quant aux groupes carboxyle, qui peuvent également provenir de groupes anhydrides, de 5 à moins de 50%,

c) une teneur en termonomère de 0 à 5 moles % rapportée à la quantité molaire totale de tous les monomères,

d) un indice de fusion de 20-200 g/10 minutes (190°C; 2,16 kg de charge (kp)) et

e) une granulométrie de 1-600 $\mu$m.

6. Procédé selon la revendication 5, **caractérisé en ce que** la résine pour vernis ou revêtement similaire contient de l'acide acrylique et/ou de l'acide méthacrylique et/ou de l'anhydride maléique copolymérisés.

7. Procédé selon les revendications 5 et 6, **caractérisé en ce que** la résine pour vernis ou revêtement similaire contient, comme termonomère, de l'acétate de vinyle ou des mélanges d'acétate de vinyle/monoxyde de carbone en une quantité de 0,1 à 5 mole % rapportée à la quantité molaire totale de tous les monomères.

8. Procédé selon les revendications 5 à 7, **caractérisé en ce que** les groupes carboxyle sont neutralisés à raison de 5 à 40 %.